# EUROPEAN PATENT APPLICATION

(11) **EP 4 712 526 A1**
(43) Date of publication of application: **18.03.2026**
(21) Application number: 24818645.4
(22) Date of filing: 04.06.2024
(51) Int. Cl.: H04W 8/18

(54) **COMMUNICATION METHOD AND COMMUNICATION APPARATUS**

(30) Priority: 08.06.2023 CN 202310679991
(71) Applicant: Huawei Technologies Co., Ltd., Shenzhen, Guangdong 518129 (CN)
(72) Inventor: CHANG, Junren, Shenzhen, Guangdong 518129 (CN); LI, Bingzhao, Shenzhen, Guangdong 518129 (CN); WANG, Lingping, Shenzhen, Guangdong 518129 (CN); YAO, Qinbo, Shenzhen, Guangdong 518129 (CN)
(74) Representative: Thun, Clemens
(86) International application number: PCT/CN2024/097297
(87) International publication number: WO 2024/251113

(57) **Abstract**

This application provides a communication method and a communication apparatus. In this method, configuration parameters of a terminal device are classified into a basic configuration parameter (namely, a common parameter of a plurality of features) and a configuration parameter of a specific feature (namely, a specific parameter of the specific feature), so that parameter configuration is independently performed for different features, the different features are decoupled from each other, and the configuration parameter of the specific feature can be added or deleted. This effectively reduces complexity of the terminal device, ensures quick marketization of a terminal device of a related feature, and avoids a compatibility risk.

## Description

### CROSS-REFERENCE TO RELATED APPLICATIONS

This application claims priority to Chinese Patent Application No. 202310679991.X, filed with the China National Intellectual Property Administration on June 8, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a wireless communication system, with continuous evolution of releases (releases), more radio resource control (radio resource control, RRC) information of protocols is accumulated, and an average quantity of new items (item, IE) of each release exceeds 2500. In an existing 3rd generation partnership project (3rd generation partnership project, 3GPP) communication system, an overall signaling design, for example, an overall RRC signaling design or an overall control plane message design, is performed only after all features of each release are stable.

Based on new features, new information elements (information element, IE) are introduced in each release, and a linear downward expansion manner is used. In this case, a large quantity of IEs are coupled between old and new releases.

The foregoing release update method has at least the following problems:
Problem 1: Promotion of the new features takes long time. Regardless of feature sizes or urgency of market requirements of the features, commercial system development and verification can be performed only after a complete release is frozen. As a result, time-to-market for the new features is long, and the market requirements cannot be met quickly.
Problem 2: A large quantity of new features in a release currently lack market requirements. Even if a product needs to be developed to support only a small feature, the entire product still needs to support storage and parsing of a common structure of complete abstract syntax notation one (abstract syntax notation one, ASN.1), which increases product complexity.
Problem 3: After continuous evolution of a plurality of releases, IEs of the releases increase rapidly, and new features are continuously added. As a result, complexity of product compatibility recognition and maintenance increases, which increases overall compatibility risks, affects user experience, and increases costs for updating products.

Therefore, how to efficiently load the features to quickly adapt to the market requirements, reduce the complexity and the costs, and minimize the compatibility risks needs to be resolved.

### SUMMARY

Embodiments of this application provide a communication method and a communication apparatus, to efficiently load features.

According to a first aspect, an embodiment of this application provides a communication method. The method may be performed by a first terminal device or a module (for example, a chip) used in a first terminal device. The method includes: receiving first information, where the first information is used to configure a common parameter of N features of the first terminal device, the N features include a first feature, and N is an integer greater than 1; receiving second information, where the second information is used to configure a specific parameter of the first feature; and loading the first feature based on the first information and the second information.

In the foregoing solution, configuration parameters of the terminal device are classified into a basic configuration parameter (namely, the common parameter of the N features) and a configuration parameter of a specific feature (namely, a specific parameter of the specific feature), so that parameter configuration is independently performed for different features, and the different features are decoupled from each other. In this manner, the configuration parameter of the specific feature can be added or deleted. This effectively reduces complexity of the terminal device, ensures quick marketization of a related feature, avoids a compatibility risk to a maximum extent, and efficiently loads the feature.

In a possible implementation method, the method includes: determining whether to load the first feature. Loading the first feature based on the first information and the second information includes: when it is determined to load the first feature, loading the first feature based on the first information and the second information.

In the foregoing solution, the terminal device loads the first feature only when determining, based on a transmission requirement or a communication environment in which the terminal device is located, to load the first feature, so that loading the feature by the first terminal device can be more flexible.

In a possible implementation method, the method further includes: receiving third information, where the third information indicates an identifier of the first feature; and determining the first feature based on a mapping relationship and the identifier of the first feature. The mapping relationship indicates a correspondence between identifiers of the N features and the N features.

In a possible implementation method, before receiving the second information, the method further includes: sending a first message. The first message is used to request to activate the first feature.

In the foregoing solution, the first terminal device requests, by sending request information, a network device to activate the specific feature, to be better adapted to a service requirement and a processing capability of the first terminal device. This also helps the network device effectively manage the feature of the first terminal device.

In a possible implementation method, sending the first message includes: sending the first message when a higher layer of the first terminal device indicates to activate the first feature.

In a possible implementation method, the method further includes: receiving first indication information, where the first indication information indicates that the first feature has been activated on a network device; and/or receiving second indication information, where the second indication information indicates the first terminal device to activate the first feature.

In the foregoing solution, the first terminal device and the network device may align understandings of whether the first feature is activated, to avoid a communication exception.

In a possible implementation method, receiving the second information includes: receiving a second message. The second message includes a first container, and the first container includes the second information.

In the foregoing solution, the second message includes the first container, and the first container is designed to facilitate subsequent parameter configuration for the specific feature. This facilitates overall loading and unloading of code corresponding to the feature, thereby reducing impact of feature introduction on an overall signaling change, improving compatibility, and reducing memory overheads of the terminal device.

In a possible implementation method, the method further includes: sending a third message. The third message indicates that the first feature fails to be loaded.

In a possible implementation method, the method further includes: sending a fourth message. The fourth message is used to request to deactivate the first feature.

In the foregoing solution, the first terminal device may request, based on a requirement of the first terminal device, to deactivate the first feature. This helps reduce resource overheads of the first terminal device, for example, reduce storage resource overheads and computing resource overheads.

In a possible implementation method, sending the fourth message includes: when a first condition is met, sending the fourth message. The first condition includes at least one of the following: a service corresponding to the first feature has been completed, power consumption corresponding to the first feature exceeds or reaches a power consumption threshold, and a temperature of the first terminal device exceeds or reaches a temperature threshold.

In a possible implementation method, the method further includes: receiving a fifth message, where the fifth message indicates to deactivate the first feature; and deactivating the first feature.

In a possible implementation method, the method further includes: receiving fourth information, where the fourth information is used to reconfigure the specific parameter of the first feature; and modifying the first feature based on the first information and the fourth information, or based on the fourth information.

In the foregoing solution, the network device may modify the first feature, and indicate the modification to the first terminal device through signaling, thereby improving flexibility of adjusting the first feature.

In a possible implementation method, before receiving the first information, the method further includes: receiving fifth information, where the fifth information is used to configure a system-level common parameter of L features, L is a positive integer, and the L features include the first feature; and/or receiving sixth information, where the sixth information is used to configure a system-level common parameter independent of a specific feature.

In the foregoing solution, system-level feature configuration parameters are classified into a basic configuration parameter of a system (that is, the system-level common parameter independent of the specific feature) and a configuration parameter of a specific feature of the system (that is, the system-level common parameter of the L features), so that the system-level feature configuration parameters are properly managed, thereby helping efficiently perform parameter configuration for the terminal device.

In a possible implementation method, the method further includes: receiving seventh information, where the seventh information is used to configure a specific parameter of a second feature, and the N features include the second feature; and loading the second feature based on the first information and the seventh information.

According to a second aspect, an embodiment of this application provides a communication method. The method may be performed by a network device or a module (for example, a chip) used in a network device. The method includes: sending first information, where the first information is used to configure a common parameter of N features of a first terminal device, the N features include a first feature, and N is an integer greater than 1; and sending second information, where the second information is used to configure a specific parameter of the first feature, and the first information and the second information are used to load the first feature.

In a possible implementation method, the method further includes: determining the first feature, or loading the first feature, or activating the first feature.

In a possible implementation method, the method further includes: If a total quantity of terminal devices that request to activate the first feature is greater than or equal to a first threshold, or if a total quantity of times of requesting to activate the first feature is greater than or equal to a second threshold, the network device determines the first feature, or loads the first feature, or activates the first feature.

In a possible implementation method, the method further includes: sending third information. The third information indicates an identifier of the first feature.

In a possible implementation method, before sending the second information, the method further includes: receiving a first message. The first message is used to request to activate the first feature.

In a possible implementation method, the method further includes: sending first indication information. The first indication information indicates that the first feature has been activated on the network device.

In a possible implementation method, the method further includes: if the total quantity of terminal devices that request to activate the first feature is greater than or equal to the first threshold, sending second indication information. The second indication information indicates to activate the first feature.

In the foregoing solution, when the total quantity of terminal devices that request to activate the first feature is greater than or equal to the first threshold, it indicates that there are a plurality of terminal devices that need to activate the first feature. Therefore, the network device allows the first terminal device to activate the first feature, which helps efficiently use the feature.

In a possible implementation method, the method further includes: if the total quantity of times of requesting to activate the first feature is greater than or equal to the second threshold, sending second indication information. The second indication information indicates to activate the first feature.

In the foregoing solution, when the total quantity of times of requesting to activate the first feature is greater than or equal to the second threshold, it indicates that there are a plurality of terminal devices that need to activate the first feature or that the first feature is frequently used. Therefore, the network device allows the first terminal device to activate the first feature, which helps efficiently use the feature.

In a possible implementation method, sending the second information includes: sending a second message. The second message includes a first container, and the first container includes the second information.

In a possible implementation method, the method further includes: receiving a third message. The third message indicates that the first feature fails to be loaded.

In a possible implementation method, the method further includes: receiving a fourth message. The fourth message is used to request to deactivate the first feature.

In a possible implementation method, the method further includes: sending a fifth message. The fifth message indicates to deactivate the first feature.

In a possible implementation method, the method further includes: sending fourth information. The fourth information is used to reconfigure the specific parameter of the first feature, and the fourth information is used to modify the first feature.

In a possible implementation method, before receiving the first information, the method further includes: sending fifth information, where the fifth information is used to configure a system-level common parameter of L features, L is a positive integer, and the L features include the first feature; and/or sending sixth information, where the sixth information is used to configure a system-level common parameter independent of a specific feature.

In a possible implementation method, the method further includes: sending seventh information. The seventh information is used to configure a specific parameter of a second feature, the N features include the second feature, and the first information and the seventh information are used to load the second feature.

According to a third aspect, an embodiment of this application provides a communication method. The method may be performed by a first terminal device or a module (for example, a chip) used in a first terminal device. The method includes: receiving a sixth message, where the sixth message includes M containers, the M containers are used to carry feature parameters of M features, the M containers include a first container, M is a positive integer, and the first container includes a specific parameter used to configure a first feature; and receiving a seventh message, where the seventh message includes a configuration parameter of a specific feature of a system, a common parameter of N features of a first terminal device, a basic configuration parameter of a first terminal device, or a basic configuration parameter used to configure a system.

In a possible implementation method, the method further includes: loading the first feature based on the sixth message and the seventh message.

According to a fourth aspect, an embodiment of this application provides a communication apparatus. The apparatus may be a first terminal device or a module (for example, a chip) used in a first terminal device. The apparatus has a function of implementing any implementation method of the first aspect and the third aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a network device or a module (for example, a chip) used in a network device. The apparatus has a function of implementing any implementation method of the second aspect. The function may be implemented by hardware, or may be implemented by hardware executing corresponding software. The hardware or the software includes one or more modules corresponding to the function.

According to a sixth aspect, an embodiment of this application provides a communication apparatus, including a unit configured to perform or a means (means) for performing steps of any implementation method of the first aspect to the third aspect.

According to a seventh aspect, an embodiment of this application provides a communication apparatus, including a processor and an interface circuit. The processor is configured to: communicate with another apparatus through the interface circuit, and perform any implementation method of the first aspect to the third aspect. There are one or more processors.

According to an eighth aspect, an embodiment of this application provides a communication apparatus, including a processor coupled to a memory. The processor is configured to invoke a program stored in the memory, to perform any implementation method of the first aspect to the third aspect. The memory may be located inside or outside the apparatus. In addition, there may be one or more processors.

According to a ninth aspect, an embodiment of this application provides a communication apparatus, including a memory. The memory is configured to store computer instructions. When the computer instructions are run, the apparatus performs any implementation method of the first aspect to the third aspect.

In a possible implementation method, the communication apparatus further includes a processor configured to execute the computer instructions stored in the memory.

According to a tenth aspect, an embodiment of this application further provides a computer program product. The computer program product includes a computer program or instructions. When the computer program or the instructions are run by a communication apparatus, any implementation method of the first aspect to the third aspect is performed.

According to an eleventh aspect, an embodiment of this application further provides a computer-readable storage medium. The computer-readable storage medium stores instructions, and when the instructions are run on a communication apparatus, any implementation method of the first aspect to the third aspect is performed.

According to a twelfth aspect, an embodiment of this application further provides a chip system, including a processor configured to perform any implementation method of the first aspect to the third aspect.

According to a thirteenth aspect, an embodiment of this application further provides a communication method. The method includes: A network device sends first information to a first terminal device. The first information is used to configure a common parameter of N features of the first terminal device, the N features include a first feature, and N is an integer greater than 1. The network device sends second information to the first terminal device. The second information is used to configure a specific parameter of the first feature, and the first information and the second information are used to load the first feature. The first terminal device loads the first feature based on the first information and the second information.

In a possible implementation method, the method further includes: The network device sends eighth information to a second terminal device. The eighth information is used to configure a common parameter of K features of the second terminal device, the K features include a third feature, and K is an integer greater than 1. The network device sends ninth information to the second terminal device. The ninth information is used to configure a specific parameter of the third feature, and the eighth information and the ninth information are used to load the third feature. The second terminal device loads the third feature based on the eighth information and the ninth information.

### BRIEF DESCRIPTION OF DRAWINGS

FIG. 1(a) is a diagram of an architecture of a communication system to which an embodiment of this application is applicable;
FIG. 1(b) is a diagram of a network device;
FIG. 2 is a schematic flowchart of a communication method according to an embodiment of this application;
FIG. 3(a) is an example diagram of module division of a terminal device;
FIG. 3(b) is an example diagram of module loading;
FIG. 4 is a schematic flowchart of a communication method according to an embodiment of this application;
FIG. 5 is a diagram of a structure of a communication apparatus according to an embodiment of this application; and
FIG. 6 is a diagram of a structure of a communication apparatus according to an embodiment of this application.

### DESCRIPTION OF EMBODIMENTS

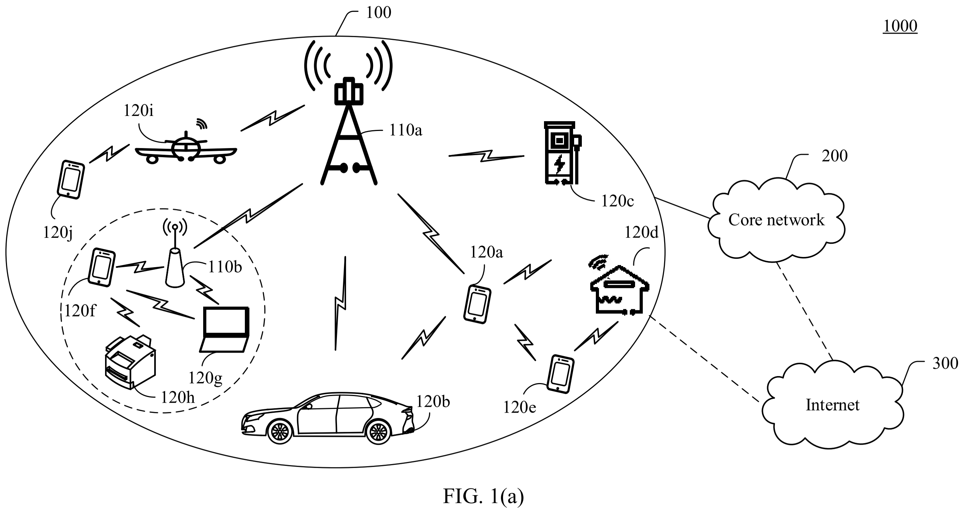

FIG. 1(a) is a diagram of an architecture of a communication system to which an embodiment of this application is applicable. A communication system 1000 shown in FIG. 1(a) includes a radio access network 100 and a core network 200. Optionally, the communication system 1000 further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. The core network device and the network device may be different independent physical devices, or a function of the core network device and a logical function of the network device may be integrated on a same physical device, or some functions of the core network device and some functions of the network device may be integrated on one physical device. Connections between terminal devices and between network devices may be in a wired or wireless manner. FIG. 1(a) is merely an example diagram. The communication system may further include other network devices, for example, may further include a wireless relay device and a wireless backhaul device, which are not shown in FIG. 1(a).

The network device is an access device that connects a terminal device to a communication system in a wired or wireless manner. The network device may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or unit that completes a part of functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part of or all functions of a physical layer. For specific descriptions of the foregoing protocol layers, refer to related technical specifications of the 3rd generation partnership project (3rd generation partnership project, 3GPP). The network device may be a macro base station (for example, 110a in FIG. 1(a)), or may be a micro base station or an indoor base station (for example, 110b in FIG. 1(a)), or may be a relay node, a donor node, or the like. A specific technology and a specific device form that are used by the network device are not limited in embodiments of this application.

The terminal device is a device having a wireless transceiver function, and may send a signal to the network device or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, remote medical, smart grid, smart furniture, smart office, smart wearable, smart transportation, and smart city. The terminal device may be specifically a mobile phone, a tablet computer, a computer having a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be at fixed positions, or may be movable. The network device and the terminal device may be deployed on land, including being deployed indoors or outdoors, or in a handheld manner or a vehicle-mounted manner; may be deployed on water; or may be deployed on an airplane, a balloon, and a man-made satellite. Application scenarios of the network device and the terminal device are not limited in embodiments of this application.

Roles of the network device and the terminal device may be relative. For example, a helicopter or an uncrewed aerial vehicle 120i in FIG. 1(a) may be configured as a mobile network device. For a terminal device 120j that accesses the radio access network 100 via 120i, the terminal device 120i is a network device. However, for a network device 110a, 120i is a terminal device, that is, 110a and 120i communicate with each other according to a radio air interface protocol. Certainly, 110a and 120i may alternatively communicate with each other according to an interface protocol between network devices. In this case, for 110a, 120i is also a network device. Therefore, both the network device and the terminal device may be collectively referred to as communication apparatuses. 110a and 110b in FIG. 1(a) may be referred to as communication apparatuses having a function of a network device, and 120a to 120j in FIG. 1(a) may be referred to as communication apparatuses having a function of a terminal device.

Communication may be performed between a network device and a terminal device, between network devices, or between terminal devices through a licensed spectrum, an unlicensed spectrum, or both a licensed spectrum and an unlicensed spectrum; may be performed through a spectrum below 6 gigahertz (gigahertz, GHz); may be performed through a spectrum above 6 GHz; or may be performed through both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. A function of the terminal device may alternatively be performed by a module (for example, a chip or a modem) in the terminal device, or may be performed by an apparatus including the function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection to a cell controlled by the network device. A cell that establishes a wireless connection to the terminal device is referred to as a serving cell of the terminal device.

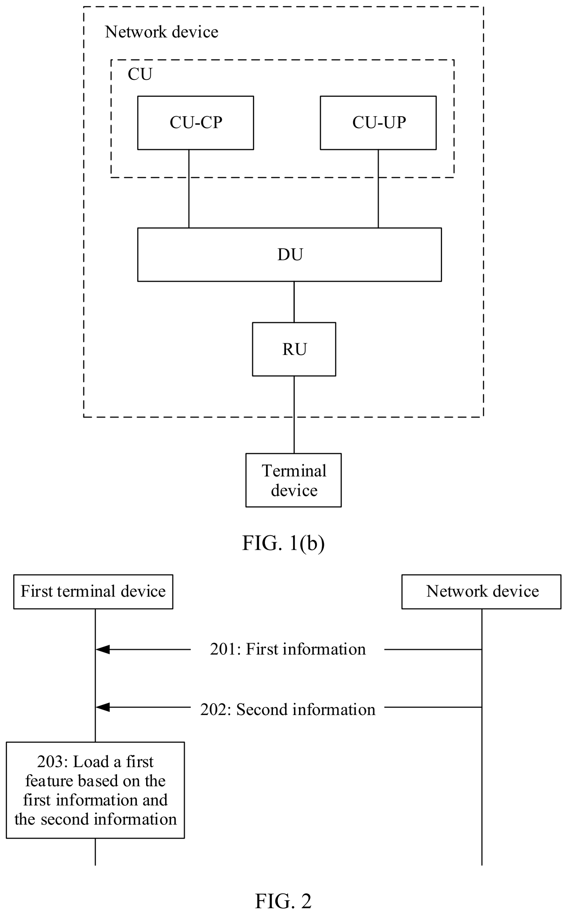

FIG. 1(b) is a diagram of a network device. As shown in FIG. 1(b), the network device includes one or more CUs, one or more DUs, and one or more radio units (radio unit, RU). For clarity, only one CU, one DU, and one RU are shown in FIG. 1(b). The CU is configured to connect to a core network and one or more DUs. Optionally, the CU may have a part of functions of the core network. The CU may include a CU-control plane (control plane, CP) and a CU-user plane (user plane, UP).

The CU and the DU may be configured based on a protocol layer function of a wireless network implemented by the CU and the DU. For example, the CU is configured to implement functions of a PDCP layer and a protocol layer above the PDCP layer (for example, a radio resource control (radio resource control, RRC) layer and/or an SDAP layer), and the DU is configured to implement a function of a protocol layer below the PDCP layer (for example, a radio link control (radio link control, RLC) layer, a MAC layer, and/or a physical (physical, PHY) layer). For another example, the CU is configured to implement a function of a protocol layer above the PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

The foregoing configurations of the CU and the DU are merely examples, and functions of the CU and the DU may alternatively be configured based on a requirement. For example, the CU or the DU may be configured to have functions of more protocol layers, or the CU or the DU may be configured to have a part of processing functions of protocol layers. For example, a part of functions of the RLC layer and functions of protocol layers above the RLC layer are set on the CU, and remaining functions of the RLC layer and functions of protocol layers below the RLC layer are set on the DU. For another example, division into functions of the CU or the DU may be performed based on service types or other system requirements. For example, division may be performed based on a delay. Functions whose processing time needs to meet a low-delay requirement are configured on the DU, and functions whose processing time does not need to meet the delay requirement are configured on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of the functions are closer to the MAC layer. The lower-layer function of the physical layer may include the other part of the functions of the physical layer, and the other part of the functions are closer to an intermediate radio frequency side.

To efficiently load a feature, quickly adapt to a market requirement, reduce complexity and costs, and minimize a compatibility risk, configuration parameters of features are classified in this application. For example, terminal-device-level feature configuration parameters may be classified, and/or system-level feature configuration parameters may be classified. The terminal-device-level feature configuration parameter refers to a configuration parameter of a feature of a specific terminal device, and the system-level feature configuration parameter refers to a configuration parameter of a feature of any terminal device in a plurality of terminal devices. In other words, a terminal-device-level feature configuration parameter is configured for a specific terminal device, and a system-level feature configuration parameter may be configured for a plurality of terminal devices.

A feature in embodiments of this application is a function or a capability of a terminal device, and includes but is not limited to an ultra-reliable low-latency communication (ultra-reliable low-latency communication, URLLC) feature, a non-terrestrial network (non-terrestrial network, NTN) feature, a vehicle to everything (vehicle to everything, V2X) feature, an extended reality (extended reality, XR) feature, a small data transmission (small data transmission, SDT) feature, a multi-card transmission feature, a low-power consumption feature, a flexible spectrum aggregation feature, and the like.

In embodiments of this application, an identifier of the feature may be allocated by the network device, or may be allocated by the core network and then sent to the network device.

The following explains some technical terms in this application.

### (1) Terminal-device-level feature configuration parameters

The terminal-device-level feature configuration parameters may be classified into a basic configuration parameter of a terminal device and a configuration parameter of a specific feature of the terminal device. The basic configuration parameter of the terminal device is also referred to as a common configuration parameter of the terminal device, a common parameter of the terminal device, or the like.

For example, a terminal device 1 includes 10 features. A common parameter of the 10 features may be used as a basic configuration parameter of the terminal device 1, and then each feature corresponds to one type of configuration parameter of the specific feature. In other words, the terminal device 1 includes 11 types of configuration parameters in total, which are one type of basic configuration parameter and 10 types of configuration parameters of features. For another example, a terminal device 2 includes five features. A parameter independent of a specific feature may be used as a basic configuration parameter of the terminal device 2, and then a parameter that depends on a specific feature is used as a configuration parameter of the feature. In other words, the terminal device 2 includes six types of configuration parameters in total, which are one type of basic configuration parameter and five types of configuration parameters of features.

In embodiments of this application, a type of configuration parameter is also referred to as a set of configuration parameters or a group of configuration parameters. This is uniformly described herein.

In embodiments of this application, the basic configuration parameter of the terminal device is also referred to as a basic configuration parameter of a feature of the terminal device, a basic feature configuration parameter of the terminal device, or a common configuration parameter of the feature of the terminal device. This is uniformly described herein.

### (2) System-level feature configuration parameters

The system-level feature configuration parameters may be classified into a basic configuration parameter of a system and a configuration parameter of a specific feature of the system. The basic configuration parameter of the system is also referred to as a basic configuration parameter of a network, a basic system configuration parameter, a common configuration parameter of the system, or the like, and the configuration parameter of the specific feature of the system is also referred to as a configuration parameter of a specific feature of the network. For example, a base station supports 10 features. Therefore, system-level feature configuration parameters of the base station include two types of configuration parameters: a basic configuration parameter of a system and configuration parameters used to configure the 10 specific features. The 10 specific features herein are merely examples. If the configuration parameters of the 10 specific features are separately configured, the system-level feature configuration parameters of the base station include 11 types of configuration parameters, which are the basic configuration parameter of the system and 10 types of configuration parameters used to configure the 10 specific features. The 10 types of configuration parameters are in a one-to-one correspondence with the 10 specific features.

In embodiments of this application, the foregoing classification manner for the terminal-device-level feature configuration parameters and the system-level feature configuration parameters may include the following four cases.

Case 1: Terminal-device-level feature configuration parameters are classified into a basic configuration parameter of a terminal device and a configuration parameter of a specific feature of the terminal device, and system-level feature configuration parameters are classified into a basic configuration parameter of a system and a configuration parameter of a specific feature of the system.

In other words, the basic configuration parameter of the terminal device is separated from the configuration parameter of the specific feature of the terminal device, or the basic configuration parameter of the terminal device is separated and decoupled from the configuration parameter of the specific feature of the terminal device; and the basic configuration parameter of the system is separated from the configuration parameter of the specific feature of the system, or the basic configuration parameter of the system is separated and decoupled from the configuration parameter of the specific feature of the system.

Case 2: Terminal-device-level feature configuration parameters are classified into a basic configuration parameter of a terminal device and a configuration parameter of a specific feature of the terminal device, and system-level feature configuration parameters are not classified.

In other words, the basic configuration parameter of the terminal device is separated/decoupled from the configuration parameter of the specific feature of the terminal device, and a basic configuration parameter of a system is not separated/decoupled from a configuration parameter of a specific feature of the system.

Case 3: Terminal-device-level feature configuration parameters are not classified, and system-level feature configuration parameters are classified into a basic configuration parameter of a system and a configuration parameter of a specific feature of the system.

In other words, a basic configuration parameter of a terminal device is not separated/decoupled from a configuration parameter of a specific feature of the terminal device, and the basic configuration parameter of the system is separated/decoupled from the configuration parameter of the specific feature of the system.

Case 4: Terminal-device-level feature configuration parameters are not classified, and system-level feature configuration parameters are not classified.

In other words, a basic configuration parameter of a terminal device is not separated/decoupled from a configuration parameter of a specific feature of the terminal device, and a basic configuration parameter of a system is not separated/decoupled from a configuration parameter of a specific feature of the system.

It should be noted that the parameter in this application may be a physical layer parameter, a MAC layer parameter, an L2 layer parameter, or an L3 layer parameter.

### (3) Container (container)

The container in this application may be understood as an information bit field, and is used to transmit information or configuration parameters of some features between communication devices. A container may be placed in a message as a whole, and a communication device that does not need to understand information in the container may not interpret the information in the container. In an optional manner, information about a feature in a container may be transparent to another container. For example, a container 1 is used to transmit information or a configuration parameter of a feature 1, a container 2 is used to transmit information or a configuration parameter of a feature 2, and the feature 2 corresponding to the container 2 may be transparent to the container 1. When a terminal device loads the feature 2, the terminal device may not interpret information about a feature that does not need to be loaded, or may not interpret a container corresponding to information about a feature that does not need to be loaded.

The container in this application may also be understood as a bit field reserved for a feature, and is used to adapt to addition, reduction, or replacement of the feature in a standard evolution process.

FIG. 2 is a schematic flowchart of a communication method according to an embodiment of this application. The method is for a case in which terminal-device-level feature configuration parameters need to be classified, that is, for Case 1 or Case 2. An example in which a terminal device and a network device perform the method is used. The method includes the following steps.

Step 201: The network device sends first information to a first terminal device. Correspondingly, the first terminal device receives the first information.

The first information is used to configure a common parameter of N features of the first terminal device, the N features include a first feature, a second feature, and the like, and N is an integer greater than 1. The common parameter herein may be a physical layer common parameter, a MAC layer common parameter, an L2 layer common parameter, or an L3 layer common parameter.

The first information may also be understood as a basic configuration parameter used to configure the first terminal device. Because the common parameter of the N features are independent of a specific feature, but is configured by the network device for the first terminal device, the common parameter of the N features may also be understood as the basic configuration parameter of the first terminal device.

Step 202: The network device sends second information to the first terminal device. Correspondingly, the first terminal device receives the second information.

The second information is used to configure a specific parameter of the first feature. The specific parameter herein may include a specific parameter of the first feature at a physical layer, a MAC layer, an L2 layer, or an L3 layer.

The second information may also be understood as a configuration parameter used to configure the first feature of the first terminal device, and a feature parameter of the first feature may also be understood as the configuration parameter of the first feature of the first terminal device.

In an implementation method, step 202 may be specifically as follows: The network device sends a second message to the first terminal device, where the second message includes a first container (container), and the first container includes the second information. In other words, the second information is included in one container.

The first container is used to configure parameters of one or more features. In an implementation method, the first container may be used to configure specific parameters of M features, where M is an integer greater than 1. In another implementation, the first container is used to configure the specific parameter of the first feature.

In a further optional manner, the second message includes a plurality of containers, and quantities of features corresponding to different containers in the plurality of containers may be the same or may be different. Alternatively, each of the plurality of containers is used to configure a specific parameter of only one feature. In other words, there is a one-to-one correspondence between a container and a feature.

Configuring the specific parameter of the feature by using the container facilitates normalization of feature configuration, and also facilitates overall loading and unloading of code corresponding to the feature. This reduces hardware overheads of the terminal device, for example, memory overheads.

In an optional manner, the second message may be an RRC reconfiguration message. For example, an existing RRC reconfiguration message is reused, and the first container is added to the existing RRC reconfiguration message, or the second message is extended to the existing RRC reconfiguration message. Alternatively, the second message may be another message different from the RRC reconfiguration message.

The RRC reconfiguration message in this application may be used to configure a new parameter, or may be used to modify a parameter, reconfigure a parameter, or the like.

Step 203: The first terminal device loads the first feature based on the first information and the second information.

For example, loading the first feature herein may alternatively be allocating a computing resource and/or allocating a storage resource to the first feature.

In the foregoing solution, configuration parameters of the terminal device are classified into a basic configuration parameter (namely, the common parameter of the N features) and a configuration parameter of a specific feature (namely, a specific parameter of the specific feature), so that parameter configuration is independently performed for different features, and the different features are decoupled from each other. In this manner, the configuration parameter of the specific feature can be added or deleted or replaced. This effectively reduces complexity of the terminal device, ensures quick marketization of a related feature, avoids a compatibility risk, and efficiently loads the feature.

In an implementation method, before the first terminal device performs step 203, the method shown in FIG. 2 further includes: The first terminal device further determines whether to load the first feature. In an example, if the first terminal device determines that the first feature needs to be loaded, the first terminal device loads the first feature based on the first information and the second information. If the first terminal device determines that the first feature does not need to be loaded, step 203 does not need to be performed. In the method, the first feature is loaded only when the first terminal device determines that the first feature needs to be loaded. This has better flexibility. For example, the first terminal device determines, based on a service requirement and a processing status (for example, a load or remaining storage space) of the first terminal device, whether the first feature needs to be enabled. In another example, if the first terminal device supports the first feature, the first terminal device loads the first feature based on the first information and the second information. If the first terminal device does not support the first feature, step 203 does not need to be performed. The method has good compatibility, and a terminal device that does not support the first feature can still interpret the first information and the second information, to avoid a communication exception.

In an implementation method, the first information and the second information may be carried in a same message, for example, carried in a same RRC reconfiguration message. The RRC reconfiguration message is not only used to configure the common parameter of the N features of the first terminal device, but also used to configure the specific parameter of the first feature of the first terminal device.

In another implementation method, the first information and the second information are carried in different messages. For example, the first information is carried in an RRC reconfiguration message, and the second information is carried in a message that is not an RRC reconfiguration message. Alternatively, the first information is carried in one RRC reconfiguration message, and the second information is carried in another RRC reconfiguration message.

In an implementation method, before step 201, the network device further sends third information to the terminal device, where the third information indicates an identifier of the first feature. For example, the third information may be carried in a system message, for example, a system information block (system information block, SIB). The system message includes identifiers of one or more features supported by the network device, and the one or more features include the first feature. For example, the system message sent by the network device includes a feature extension list (featureExtensionList), and featureExtensionList includes the identifiers (FeatureId) of the one or more features supported by the network device. Optionally, the system message further includes indication information indicating whether a feature in featureExtensionList has been activated. If a feature in featureExtensionList is activated, service data corresponding to the feature may be transmitted. Herein, featureExtensionList includes a mapping relationship between a feature and a feature identifier. For example, featureExtensionList indicates a correspondence between identifiers of the N features and the N features. After receiving the third information, the first terminal device determines the first feature based on the mapping relationship and an identifier indicated by third indication information. The mapping relationship is preconfigured on the first terminal device and the network device, or is predefined in a protocol.

For example, Table 1 is an example of featureExtensionList, and the following Table 1 is configured on both the terminal device and the network device.

**Table 1**

| Feature | Identifier of the feature |
|---|---|
| Feature 1 | ID 1 |
| Feature 2 | ID 2 |
| ... | ... |
| Feature N | ID N |

In an example in which a SIB 1 carries featureExtensionList, pseudocode is as follows:

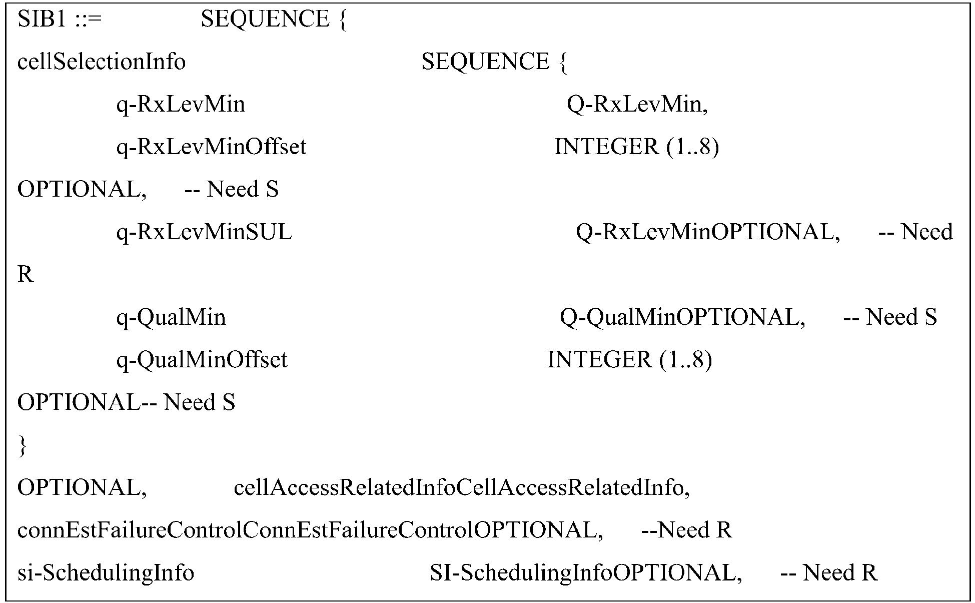

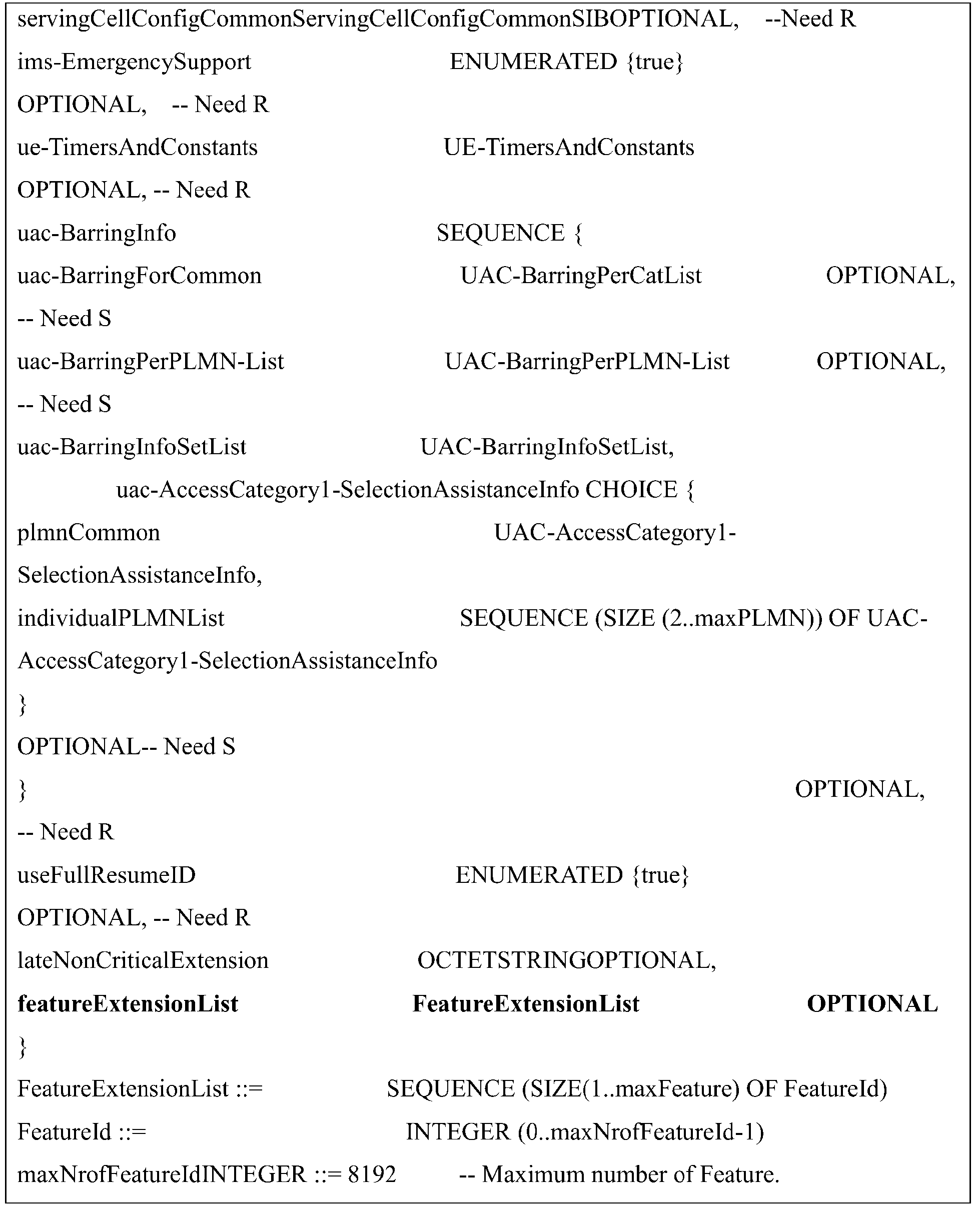

It should be specially noted that an IE other than items in featureExtensionList in the SIB 1 is merely an example, and whether the IE actually appears or exists in a related system does not affect the solutions of this application.

In an implementation method, loading the first feature in step 203 specifically includes configuring the first feature and activating the first feature. Configuring the first feature refers to configuring related parameters of the first feature, and activating the first feature refers to enabling the first feature, that is, the first feature becomes available.

In still another implementation method, loading the first feature in step 203 includes configuring the first feature, but does not include activating the first feature. Therefore, whether the first feature needs to be activated needs to be further determined.

For example, after receiving the third information from the network device, the first terminal device further receives second indication information indicating the first terminal device to activate the first feature. In this case, after loading the first feature, the first terminal device activates the first feature based on the second indication information.

For another example, after receiving the third information from the network device, if the first terminal device does not receive the second indication information indicating the first terminal device to activate the first feature, or receives first indication information indicating that the first feature has been activated on the network device, when the first terminal device determines that the first feature needs to be activated, the first terminal device sends a first message to the network device. The first message is used to request to activate the first feature, and the first message is also referred to as an activation request message, an activation message, or the like. That the first terminal device determines that the first feature needs to be activated may be, for example, that a higher layer of the first terminal device indicates to activate the first feature. After receiving the first message, the network device sends, to the first terminal device, the second indication information indicating the first terminal device to activate the first feature.

For example, the network device may alternatively determine or judge whether to allow the terminal device to activate the first feature. In this manner, before step 201, the method shown in FIG. 2 further includes: The network device loads or activates the first feature. For example, if a total quantity of terminal devices that request to activate the first feature is greater than or equal to a first threshold, or if a total quantity of times of requesting to activate the first feature is greater than or equal to a second threshold, the network device sends, to the first terminal device, the second indication information indicating the first terminal device to activate the first feature.

Optionally, the first indication information may be separately sent by the network device to the first terminal device, or may be sent by the network device to a plurality of terminal devices. In other words, the network device may further send the second indication information to a terminal device other than the first terminal device. For example, the first indication information is carried in a broadcast message. The network device sends the broadcast message, and a plurality of terminal devices including the first terminal device receive the broadcast message, to obtain the second indication information. For another example, the network device sends a multicast message to a group of terminal devices that request to activate the first feature. The multicast message includes the second indication information. The terminal devices in the group receive the multicast message, to obtain the second indication information. For another example, the network device separately sends a unicast message, for example, an activation response message or an RRC reconfiguration message, to the terminal devices that request to activate the first feature. The first terminal device and another terminal device (for example, a second terminal device) may receive the unicast message, to obtain the second indication information.

In an implementation method, if the first feature fails to be loaded or the first terminal device does not support the first feature in step 203, the first terminal device may send a third message to the network device. The third message indicates that the first feature fails to be loaded or indicates that the first terminal device does not support the first feature, and the third message may include the identifier of the first feature. For example, if an abnormal configuration occurs in a reconfiguration process, the first terminal device may report the identifier of the first feature to the network device. Optionally, the first terminal device may further unload a successfully configured related configuration of the first feature.

In an implementation method, if the first terminal device needs to deactivate the first feature, the first terminal device may send a fourth message to the network device. The fourth message is used to request to deactivate the first feature, and the fourth message may include the identifier of the first feature. The fourth message is also referred to as a deactivation request message. For example, when a first condition is met, the first terminal device determines that the first feature needs to be deactivated, and then sends the fourth message. The first condition includes at least one of the following: a service corresponding to the first feature has been completed, power consumption corresponding to the first feature exceeds or reaches a power consumption threshold, and a temperature of the first terminal device exceeds or reaches a temperature threshold. If the temperature of the first terminal device exceeds or reaches the temperature threshold, it indicates that the first terminal device is overheated. The temperature threshold may be configured by an operator, or may be customized by the first terminal device.

In an implementation method, after receiving the fourth message, if determining to allow the first terminal device to deactivate the first feature, the network device sends a fifth message to the first terminal device. The fifth message indicates to deactivate the first feature, and then the first terminal device deactivates the first feature. The fifth message is also referred to as a deactivation message or a deactivation response message. Optionally, that the first terminal device deactivates the first feature may also be understood as that the first terminal device unloads a related configuration of the first feature, and releases a computing resource and/or a storage resource related to the first feature. In this method, the first terminal device may deactivate, based on the service requirement or the processing status of the first terminal device, a feature that does not need to be used, so that overheads of computing resources and/or buffer resources of the terminal device can be reduced.

In an implementation method, after the first feature is loaded, if the network device needs to modify a related configuration parameter of the first feature, the network device sends fourth information to the first terminal device. The fourth information is used to reconfigure the specific parameter of the first feature, and then the first terminal device modifies the first feature based on the first information and the fourth information, or modifies the first feature based on the fourth information.

In an implementation method, any feature of the first terminal device, for example, the first feature, may be further divided into one or more sub-features. In addition, a part of sub-features of different features can be reused. For example, the first feature includes a sub-feature 1, a sub-feature 2, and a sub-feature 3, and the second feature includes the sub-feature 1, a sub-feature 4, and a sub-feature 5. Therefore, the sub-feature 1 is reused by the first feature and the second feature. For example, when the first feature is already in an active state, the network device may activate only the sub-feature 4 and the sub-feature 5 of the second feature. In this manner, the network device may activate only a part of sub-features of a feature, so that signaling overheads can be reduced.

In an implementation method, for any feature of the first terminal device, for example, the first feature, the configuration parameters of the first feature may be standardized. In other words, the configuration parameters of the first feature may be predefined. Therefore, when the first feature needs to be activated, the network device only needs to indicate the first terminal device to activate the first feature, and does not need to send, to the first terminal device, specific configuration parameters (namely, the second information) used to configure the first feature of the first terminal device. Therefore, signaling overheads can be reduced, and a configuration delay can be reduced. This manner may also be understood as that each feature is standardized as an independent default parameter, and when a corresponding feature is activated, the default parameter managed by an identifier of the feature may be activated, thereby reducing configuration overheads.

In an implementation method, in a scenario in which a basic configuration parameter of a system is separated/decoupled from a configuration parameter of a specific feature of the system, before step 201, the network device may send the fifth information and/or sixth information to the first terminal device. The fifth information is used to configure a system-level common parameter of L features, L is a positive integer, and the L features include the first feature. It may also be understood that the fifth information is used to configure configuration parameters of a specific feature of the system. That the sixth information is used to configure a system-level common parameter independent of a specific feature may also be understood as that the sixth information is used to configure the basic configuration parameter of the system. After receiving the fifth information and the sixth information, the first terminal device may establish a connection to the network device based on the fifth information and the sixth information. For example, the fifth information and the sixth information may be carried in a same message, for example, a system message, or may be carried in different messages. For example, when the fifth information and the sixth information are carried in a same system message, the fifth information and the sixth information may be carried in a same system message as the third information.

In an implementation method, for a feature other than the first feature in the first terminal device, feature loading may also be performed in the foregoing manner. For example, the second feature of the first terminal device is loaded. The network device sends seventh information to the first terminal device. The seventh information is used to configure a specific parameter of the second feature. Then, the first terminal device loads the second feature based on the first information and the seventh information.

In embodiments of this application, because the configuration parameters of the feature is divided, the first terminal device in this application may also be divided into a base module and a feature module based on the configuration parameters of the feature. The base module is configured to process a basic configuration parameter of the terminal device, and the feature module is configured to process a configuration parameter of a specific feature of the terminal device.

In embodiments of this application, the base module may alternatively have another name, for example, referred to as a first module, a foundation module, or a basic configuration parameter module, and the feature module may alternatively have another name, for example, referred to as a second module or a specific feature configuration parameter module. The name of the module does not constitute a limitation on a function of the module. In future standard evolution, the name of the module may change. This is not limited in this application.

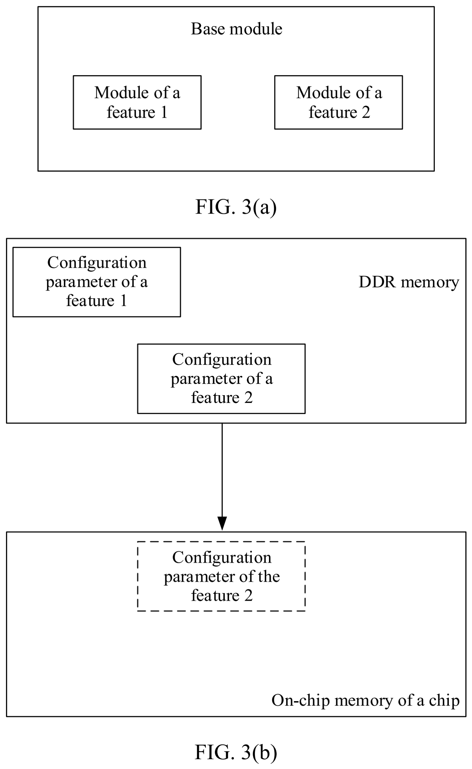

FIG. 3(a) is an example diagram of module division of a terminal device. In this example, a base module, a module of a feature 1, and a module of a feature 2 are configured on the terminal device. In the method, configuration parameters of different features are used as granularity, independent modules are involved, and the modules are separately numbered and managed, so that the terminal device can perform module decoupling and separate program design between features in terms of function support. When the terminal device needs to support a plurality of features, modular loading may be performed based on the base module. The base module has a simplified feature. The base module is a module that is of the terminal device and that corresponds to a basic function parameter independent of a specific feature. For example, parameters corresponding to the base module includes an initial access configuration parameter, a connection management configuration parameter, a service configuration parameter, and the like. Alternatively, the base module is a common configuration parameter module of a plurality of features. When performing compatibility detection and reconfiguration operations, the terminal device performs independent configuration based on modules, and different modules are separately numbered and managed. When an abnormal configuration occurs on a module, the terminal device releases only a configuration of the abnormal module, or the terminal device reports, to a network, the module with the abnormal configuration.

In an implementation method, one or more interfaces are reserved in the base module, and the interfaces may be one or more extension positions reserved in the base module. The terminal device is used as an example. When the module of the feature 2 needs to be loaded or activated, the terminal device introduces, by using the extension position reserved in the base module as an extension interface, a configuration module corresponding to the module of the feature 2. If the module of the feature 2 is no longer needed subsequently, the terminal device may remove the module of the feature 2 to release a corresponding interface for subsequent loading or activation of another feature module. In this way, the interface reserved in the base module can be flexibly and efficiently used.

Generally, different pieces of storage space exist in the terminal device for different purposes. For example, one type of storage space features a large capacity and low costs. A double data rate (double data rate, DDR) memory is used as an example. A data access rate of this type of storage space is low or a delay is high. Another type of storage space is on-chip storage space of a chip. This type of storage space features a high data read rate or a low delay. However, due to an area constraint, a cost constraint, and a power consumption constraint of the chip, this type of storage space is usually small and cannot accommodate a large amount of data.

FIG. 3(b) is an example diagram of module loading. If the feature 1 and the feature 2 do not require activation or service enabling, configuration parameters of the feature 1 and the feature 2 may be stored in the first type of storage space (for example, the DDR memory or other storage space with lower costs). Currently, because the feature 1 and the feature 2 do not need to participate in a communication process of the terminal device, storing the configuration parameters of the feature 1 and the feature 2 in the first type of storage space has two significant advantages: First, storage in such space can reduce occupation of an on-chip memory of the chip, reduce a requirement and storage power consumption of the on-chip memory of the chip, and reduce costs of the on-chip memory of the chip to some extent. Second, because the parameters of the feature 1 and the feature 2 do not participate in an actual communication process, a communication exception caused by a configuration problem of such parameters can be avoided.

When a feature needs to be activated for use, for example, when the terminal device needs to activate the feature 2, the terminal device may quickly transfer, through a high-speed channel between the DDR memory and the on-chip memory of the chip, the configuration parameters of the feature 2 to the on-chip memory of the chip, and quickly load the configuration parameters of the feature 2 on the base module, so that the feature 2 can be quickly used. When a feature is no longer needed, for example, when a function related to the feature 2 is temporarily not needed, the terminal device may export the configuration parameters of the feature 2 from the on-chip memory of the chip to the DDR memory for independent storage, so that saved space of the on-chip memory of the chip can be reserved for another new feature that needs to be activated.

In this solution, modular design of different features, flexible use of a plurality of different pieces of memory space, and flexible combination of the base module and the feature module are implemented, so that different feature modules can be quickly loaded and unloaded, and different features can be quickly enabled or disabled while on-chip memory overheads are reduced. In addition to ensuring user experience, usage of the on-chip memory of the chip is reduced, so that an area, costs, and the like of the chip can be reduced, and a probability of occurrence of a compatibility problem like a configuration exception caused by coupling between features is also reduced. This ensures user experience.

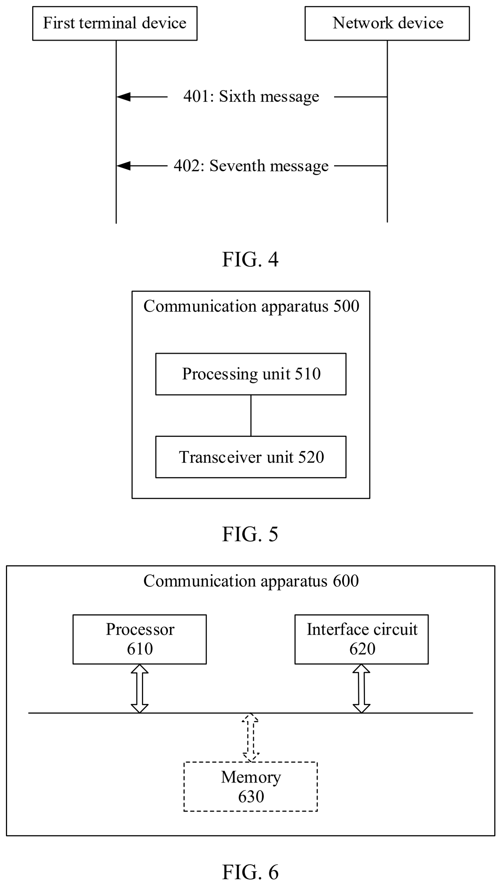

FIG. 4 is a schematic flowchart of a communication method according to an embodiment of this application. The method includes the following steps.

Step 401: A network device sends a sixth message to a first terminal device. Correspondingly, the first terminal device receives the sixth message.

The sixth message includes M containers, the M containers are used to carry feature parameters of M features, M is a positive integer, and each container is used to carry a specific parameter of one feature.

The M containers include a first container, and the first container includes a specific parameter used to configure a first feature. M-1 containers in the M containers are respectively used to configure specific parameters of other features.

In this application, that the M containers are used to carry the M features may also be understood as that the M containers are reserved for specific parameters of the M features. For example, M is 10, five of the M containers are used to carry a first feature to a fifth feature, and the other five containers are reserved for new features after standard evolution.

Step 402: The network device sends a seventh message to the first terminal device. Correspondingly, the first terminal device receives the seventh message.

The seventh message includes a configuration parameter of a specific feature of a system, a common parameter of N features of the first terminal device, a basic configuration parameter of the first terminal device, or a basic configuration parameter used to configure a system.

The first terminal device may load the first feature based on the sixth message and the seventh message. In other words, the first terminal device loads the first feature based on a specific parameter that is in the first container and that is used to configure the first feature, the configuration parameter that is of the specific feature of the system and that is in the seventh message, the common parameter of the N features of the first terminal device, and the basic configuration parameter of the first terminal device or the basic configuration parameter used to configure the system.

In the foregoing solution, the sixth message includes the M containers, and the M containers are designed to facilitate subsequent parameter configuration for specific features. This facilitates overall loading and unloading of code corresponding to the feature, thereby reducing impact of feature introduction on an overall signaling change, improving compatibility, and reducing memory overheads of the terminal device.

In an implementation method, for Case 3 in which the terminal-device-level feature configuration parameters are not classified, and the system-level feature configuration parameters are classified into the basic configuration parameter of the system and the configuration parameter of the specific feature of the system, when the terminal device receives the system-level feature configuration parameters delivered by the network device, for the basic configuration parameter of the system, the terminal device needs to store and update the parameter, and for the configuration parameter of the specific feature of the system, the terminal device may determine, based on whether the terminal device needs to support the specific feature, whether to store or update the related configuration parameter. If the terminal device does not support a specific feature or determines that the specific feature does not need to be supported currently, the terminal device may ignore a configuration parameter of the specific feature, and does not store the configuration parameter. If the terminal device already supports or needs to support a specific feature, the terminal device may store or update a configuration parameter of the specific feature, and use the configuration parameter when needed subsequently.

In Case 3, because the terminal-device-level feature configuration parameters are not classified based on the specific feature, the terminal device may process the terminal-device-level feature configuration parameters according to a similar conventional technology, for example, perform storage, update, or another related operation when receiving a configuration of a related parameter, for example, remove a specific configuration parameter.

For Case 3, the terminal device may perform differentiation processing on system-level feature configuration parameters, to accelerate commercial use of some features to some extent, especially some new features of the terminal device in an idle state (idle state) or an inactive (inactive) state. Generally, when the terminal device is in the idle state or the inactive state, the terminal device does not need to access a network to perform excessive management on terminal-device-level feature configuration parameters. For example, for a low-power consumption optimization feature of idle state measurement and an optimization feature of cell reselection, the terminal device may activate and use a related feature or optimize a function based on a system-level feature configuration parameter provided by the network device through system information. This helps improve user experience, improve performance of the terminal device, and reduce energy consumption of the terminal device.

It may be understood that, to implement the functions in the foregoing embodiments, the first terminal device or the network device includes corresponding hardware structures and/or corresponding software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 5 and FIG. 6 are diagrams of structures of possible communication apparatuses according to embodiments of this application. These communication apparatuses may be configured to implement functions of the first terminal device or the network device in the foregoing method embodiments, and therefore can also implement beneficial effect of the foregoing method embodiments. In this embodiment of this application, the communication apparatus may be the first terminal device or the network device, or may be a module (for example, a chip) used in the first terminal device or the network device.

The communication apparatus 500 shown in FIG. 5 includes a processing unit 510 and a transceiver unit 520. The communication apparatus 500 is configured to implement functions of the first terminal device or the network device in the foregoing method embodiments.

When the communication apparatus 500 is configured to implement functions of the first terminal device in the foregoing method embodiments, the transceiver unit 520 is configured to: receive first information, where the first information is used to configure a common parameter of N features of the first terminal device, the N features include a first feature, and N is an integer greater than 1; and receive second information, where the second information is used to configure a specific parameter of the first feature. The processing unit 510 is configured to load the first feature based on the first information and the second information.

In a possible implementation method, the processing unit 510 is further configured to determine whether to load the first feature. That the processing unit 510 is configured to load the first feature based on the first information and the second information specifically includes: when it is determined to load the first feature, loading the first feature based on the first information and the second information.

In a possible implementation method, the transceiver unit 520 is further configured to receive third information, where the third information indicates an identifier of the first feature. The processing unit 510 is further configured to determine the first feature based on a mapping relationship and the identifier of the first feature. The mapping relationship indicates a correspondence between identifiers of the N features and the N features.

In a possible implementation method, the transceiver unit 520 is further configured to send a first message before receiving the second information. The first message is used to request to activate the first feature.

In a possible implementation method, that the transceiver unit 520 is configured to send the first message specifically includes: sending the first message when a higher layer of the first terminal device indicates to activate the first feature.

In a possible implementation method, the transceiver unit 520 is further configured to: receive first indication information, where the first indication information indicates that the first feature has been activated on a network device; and/or receive second indication information, where the second indication information indicates the first terminal device to activate the first feature.

In a possible implementation method, that the transceiver unit 520 is further configured to receive the second information specifically includes: receiving a second message. The second message includes a first container, and the first container includes the second information.

In a possible implementation method, the transceiver unit 520 is further configured to send a third message. The third message indicates that the first feature fails to be loaded.

In a possible implementation method, the transceiver unit 520 is further configured to send a fourth message. The fourth message is used to request to deactivate the first feature.

In a possible implementation method, that the transceiver unit 520 is configured to send the fourth message specifically includes: when a first condition is met, sending the fourth message. The first condition includes at least one of the following: a service corresponding to the first feature has been completed, power consumption corresponding to the first feature exceeds a power consumption threshold, and a temperature of the first terminal device exceeds a temperature threshold.

In a possible implementation method, the transceiver unit 520 is further configured to: receive a fifth message, where the fifth message indicates to deactivate the first feature; and deactivate the first feature.

In a possible implementation method, the transceiver unit 520 is further configured to: receive fourth information, where the fourth information is used to reconfigure the specific parameter of the first feature; and modify the first feature based on the first information and the fourth information, or based on the fourth indication information.

In a possible implementation method, the transceiver unit 520 is further configured to: receive fifth information before receiving the first information, where the fifth information is used to configure a system-level common parameter of L features, L is a positive integer, and the L features include the first feature; and/or receive sixth information, where the sixth information is used to configure a system-level common parameter independent of a specific feature.

In a possible implementation method, the transceiver unit 520 is further configured to receive seventh information, where the seventh information is used to configure a specific parameter of a second feature, and the N features include the second feature. The processing unit 510 is further configured to load the second feature based on the first information and the seventh information.

When the communication apparatus 500 is configured to implement functions of the network device in the foregoing method embodiments, the processing unit 510 is configured to control the transceiver unit 520 to: send first information, where the first information is used to configure a common parameter of N features of the first terminal device, the N features include a first feature, and N is an integer greater than 1; and send second information, where the second information is used to configure a specific parameter of the first feature, and the first information and the second information are used to load the first feature.

In a possible implementation method, the processing unit 510 is further configured to control the transceiver unit 520 to send third information. The third information indicates an identifier of the first feature.

In a possible implementation method, the processing unit 510 is further configured to control the transceiver unit 520 to receive a first message before sending the second information. The first message is used to request to activate the first feature.

In a possible implementation method, the processing unit 510 is further configured to control the transceiver unit 520 to send first indication information. The first indication information indicates that the first feature has been activated on the network device.

In a possible implementation method, the processing unit 510 is specifically configured to control the transceiver unit 520 to: if a total quantity of terminal devices that request to activate the first feature is greater than or equal to a first threshold, send second indication information. The second indication information indicates to activate the first feature.

In a possible implementation method, the processing unit 510 is specifically configured to: if a total quantity of times of requesting to activate the first feature is greater than or equal to a second threshold, control the transceiver unit 520 to send second indication information. The second indication information indicates to activate the first feature.

In a possible implementation method, that the processing unit 510 is configured to control the transceiver unit 520 to send the second information specifically includes: controlling the transceiver unit 520 to send a second message. The second message includes a first container, and the first container includes the second information.

In a possible implementation method, the processing unit 510 is further configured to control the transceiver unit 520 to receive a third message. The third message indicates that the first feature fails to be loaded.

In a possible implementation method, the processing unit 510 is further configured to control the transceiver unit 520 to receive a fourth message. The fourth message is used to request to deactivate the first feature.

In a possible implementation method, the processing unit 510 is further configured to control the transceiver unit 520 to send a fifth message. The fifth message indicates to deactivate the first feature.

In a possible implementation method, the processing unit 510 is further configured to control the transceiver unit 520 to send fourth information. The fourth information is used to reconfigure a specific parameter of the first feature, and the first information and the fourth information are used to modify the first feature.

In a possible implementation method, the processing unit 510 is further configured to control the transceiver unit 520 to: send fifth information before receiving the first information, where the fifth information is used to configure a system-level common parameter of L features, L is a positive integer, and the L features include the first feature; and/or send sixth information, where the sixth information is used to configure a system-level common parameter independent of a specific feature.

In a possible implementation method, the processing unit 510 is further configured to control the transceiver unit 520 to send seventh information. The seventh information is used to configure a specific parameter of a second feature, the N features include the second feature, and the first information and the seventh information are used to load the second feature.

For more detailed descriptions of the processing unit 510 and the transceiver unit 520, directly refer to related descriptions in the foregoing method embodiments. Details are not described herein again.

A communication apparatus 600 shown in FIG. 6 includes a processor 610 and an interface circuit 620. The processor 610 and the interface circuit 620 are coupled to each other. It can be understood that the interface circuit 620 may be a transceiver or an input/output interface. Optionally, the communication apparatus 600 may further include a memory 630, configured to: store instructions executed by the processor 610, store input data required by the processor 610 to run the instructions, or store data generated after the processor 610 runs the instructions.

When the communication apparatus 600 is configured to implement the method embodiment, the processor 610 is configured to implement the function of the processing unit 510, and the interface circuit 620 is configured to implement the function of the transceiver unit 520.

It may be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the terminal device or the network device. Certainly, the processor and the storage medium may alternatively exist in an access network device or a terminal as discrete components.

All or a part of the foregoing embodiments may be implemented by software, hardware, firmware, or any combination thereof. When software is used to implement embodiments, all or a part of embodiments may be implemented in a form of computer program product. The computer program product includes one or more computer programs or instructions. The computer program (English: Computer Program) is a set of instructions that indicate each step of an electronic computer or another device having a message processing capability, is usually written in a program design language, and is run in a target system structure. When the computer programs or instructions are loaded and executed on a computer, the procedures or functions in embodiments of this application are all or partially executed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first terminal device, comprising:
receiving first information, wherein the first information is used to configure a common parameter of N features of the first terminal device, the N features comprise a first feature, and N is an integer greater than 1;
receiving second information, wherein the second information is used to configure a specific parameter of the first feature; and
loading the first feature based on the first information and the second information.

2. The method according to claim 1, wherein the method further comprises:
determining whether to load the first feature; and
loading the first feature based on the first information and the second information comprises:
when it is determined to load the first feature, loading the first feature based on the first information and the second information.

3. The method according to claim 1 or 2, wherein the method further comprises:
receiving third information, wherein the third information indicates an identifier of the first feature; and
determining the first feature based on a mapping relationship and the identifier of the first feature, wherein the mapping relationship indicates a correspondence between identifiers of the N features and the N features.

4. The method according to claim 3, wherein before receiving the second information, the method further comprises:
sending a first message, wherein the first message is used to request to activate the first feature.

5. The method according to claim 4, wherein sending the first message comprises:
sending the first message when a higher layer of the first terminal device indicates to activate the first feature.

6. The method according to any one of claims 1 to 5, wherein the method further comprises:
receiving first indication information, wherein the first indication information indicates that the first feature has been activated on a network device; and/or
receiving second indication information, wherein the second indication information indicates the first terminal device to activate the first feature.

7. The method according to any one of claims 1 to 6, wherein receiving the second information comprises:
receiving a second message, wherein the second message comprises a first container, and the first container comprises the second information.

8. The method according to any one of claims 1 to 7, wherein the method further comprises:
sending a third message, wherein the third message indicates that the first feature fails to be loaded.

9. The method according to any one of claims 1 to 8, wherein the method further comprises:
sending a fourth message, wherein the fourth message is used to request to deactivate the first feature.

10. The method according to claim 9, wherein sending the fourth message comprises:
when a first condition is met, sending the fourth message, wherein the first condition comprises at least one of the following: a service corresponding to the first feature has been completed, power consumption corresponding to the first feature exceeds or reaches a power consumption threshold, and a temperature of the first terminal device exceeds or reaches a temperature threshold.

11. The method according to claim 9 or 10, wherein the method further comprises:
receiving a fifth message, wherein the fifth message indicates to deactivate the first feature; and
deactivating the first feature.

12. The method according to any one of claims 1 to 11, wherein the method further comprises:
receiving fourth information, wherein the fourth information is used to reconfigure the specific parameter of the first feature; and
modifying the first feature based on the first information and the fourth information, or based on the fourth information.

13. The method according to claim 1 or 2, wherein before receiving the first information, the method further comprises:
receiving fifth information, wherein the fifth information is used to configure a system-level common parameter of L features, L is a positive integer, and the L features comprise the first feature; and/or
receiving sixth information, wherein the sixth information is used to configure a system-level common parameter independent of a specific feature.

14. The method according to any one of claims 1 to 13, wherein the method further comprises:
receiving seventh information, wherein the seventh information is used to configure a specific parameter of a second feature, and the N features comprise the second feature; and
loading the second feature based on the first information and the seventh information.

15. A communication method, applied to a network device, comprising:
sending first information, wherein the first information is used to configure a common parameter of N features of a first terminal device, the N features comprise a first feature, and N is an integer greater than 1; and
sending second information, wherein the second information is used to configure a specific parameter of the first feature, and the first information and the second information are used to load the first feature.

16. The method according to claim 15, wherein the method further comprises:
sending third information, wherein the third information indicates an identifier of the first feature.

17. The method according to claim 16, wherein before sending the second information, the method further comprises:
receiving a first message, wherein the first message is used to request to activate the first feature.

18. The method according to claim 17, wherein the method further comprises:
sending first indication information, wherein the first indication information indicates that the first feature has been activated on the network device.

19. The method according to any one of claims 15 to 18, wherein the method further comprises:
if a total quantity of terminal devices that request to activate the first feature is greater than or equal to a first threshold, sending second indication information, wherein the second indication information indicates to activate the first feature.

20. The method according to any one of claims 15 to 18, wherein the method further comprises:
if a total quantity of times of requesting to activate the first feature is greater than or equal to a second threshold, sending second indication information, wherein the second indication information indicates to activate the first feature.

21. The method according to any one of claims 15 to 20, wherein sending the second information comprises:
sending a second message, wherein the second message comprises a first container, and the first container comprises the second information.

22. The method according to any one of claims 15 to 21, wherein the method further comprises:
receiving a third message, wherein the third message indicates that the first feature fails to be loaded.

23. The method according to any one of claims 15 to 22, wherein the method further comprises:
receiving a fourth message, wherein the fourth message is used to request to deactivate the first feature.

24. The method according to claim 23, wherein the method further comprises:
sending a fifth message, wherein the fifth message indicates to deactivate the first feature.

25. The method according to any one of claims 15 to 24, wherein the method further comprises:
sending fourth information, wherein the fourth information is used to reconfigure the specific parameter of the first feature, and the first information and the fourth information are used to modify the first feature.

26. The method according to claim 15, wherein before receiving the first information, the method further comprises:
sending fifth information, wherein the fifth information is used to configure a system-level common parameter of L features, L is a positive integer, and the L features comprise the first feature; and/or
sending sixth information, wherein the sixth information is used to configure a system-level common parameter independent of a specific feature.

27. The method according to any one of claims 15 to 26, wherein the method further comprises:
sending seventh information, wherein the seventh information is used to configure a specific parameter of a second feature, and the N features comprise the second feature.

28. A communication apparatus, comprising a processor and an interface circuit, wherein the processor is configured to communicate with another apparatus through the interface circuit, and perform the method according to any one of claims 1 to 14, or perform the method according to any one of claims 15 to 27.

29. A communication apparatus, comprising a module configured to perform the method according to any one of claims 1 to 14 or the method according to any one of claims 15 to 27.

30. A communication apparatus, comprising a processor coupled to a memory, wherein the processor is configured to invoke a program stored in the memory, to perform the method according to any one of claims 1 to 14 or the method according to any one of claims 15 to 27.

31. A communication apparatus, comprising a memory, wherein the memory is configured to store computer instructions, and when the computer instructions are run, the method according to any one of claims 1 to 14 or the method according to any one of claims 15 to 27 is implemented.

32. A computer-readable storage medium, wherein the storage medium stores a computer program or instructions, and when the computer program or the instructions are executed by a communication apparatus, the method according to any one of claims 1 to 14 or the method according to any one of claims 15 to 27 is implemented.

33. A computer program product, wherein the computer program product comprises instructions, and when the instructions are run by a communication apparatus, the method according to any one of claims 1 to 14 or the method according to any one of claims 15 to 27 is performed.
